# EUROPEAN PATENT SPECIFICATION

(11) **EP 2 745 975 B1**
(45) Date of publication and mention of the grant of the patent: **02.08.2017**
(21) Application number: 13198334.8
(22) Date of filing: 19.12.2013
(51) Int. Cl.: B23K 26/00, B23K 26/04, C03B 23/20, G01B 11/14

(54) **A METHOD TO WELD TOGETHER PIECES THAT CONTAIN SUBSTRATUM USING A FOCUSED LASER BEAM**
VERFAHREN ZUM ZUSAMMENSCHWEISSEN VON SUBSTRATHALTIGEN TEILEN MIT EINEM FOKUSSIERTEN LASERSTRAHL
PROCÉDÉ POUR SOUDER ENSEMBLE DES MORCEAUX QUI CONTIENNENT UN SUBSTRAT À L'AIDE D'UN FAISCEAU LASER FOCALISÉ

(30) Priority: 21.12.2012 FI 20120420
(43) Date of publication of application: 25.06.2014
(73) Proprietor: Primoceler Oy, 33720 Tampere (FI)
(72) Inventor: Määttänen, Antti, 33180 Tampere (FI)
(74) Representative: Berggren Oy, Tampere

(56) References cited:
- WO-A2-2011/144813
- JP-A- 2008 119 718
- US-A1- 2005 021 170
- US-A1- 2010 047 587

## Description

The object of this invention is a method to weld together pieces that contain substratum and/or half conductor substratum and a general work unit according to the preamble of claims 1 and 6 respectively (see, for example, US2010/047587 A1). The usage place of the invention is especially such uniting by welding of pieces where the common surfaces areas are three-dimensional. This diversion from the plane surface can be caused by an intentional plane formation or of a diversion of a surface that has been intended to be a plane surface into a three-dimensional plane for some reason. The pieces to be united can consist totally or partly of substratum(s). For instance we can mention the pieces that contain a substratum layer and a conducting layer joined to it in such a way that these conducting layers are against each other in the common surface between the pieces. Metals are generally used as the material of the conducting layers. The substratum can largely be any material or material combination where melting and getting hard again can happen by a focused laser beam. They can be homogenous or composed of areas and/or layers of different materials. As an example we can mention glass and/or silicon substratum semiconductor components that are used in micro electronics. Using the method of the invention, for instance detectors and optic components can be closed and packaged hermetically.

According to the known technique the welding of the before mentioned pieces takes place by batched welding where the height position of the focal point of the focused laser beam is corrected to correspond the changed height position of the common surface of the advancing path of the laser beam. In other words, for instance to obtain a unanimous circle welding by one go is not possible using the methods of the known technique when it is question about joining together three-dimensional surfaces by welding.

The before mentioned known technique has been described for instance in the patent publication FI20105539. It is presented in this publication mainly how to weld together pieces by laser beam using the batched welding. It is presented in the publication also how to form a circle welding by a focused laser beam but in this case it is question about a totally planar welding area that is the common surface between the pieces to be welded. The publication does not present any other solution to weld the pieces together by a laser beam where the common surface is not planar - other than batch welding.

It is known that such planar welding objects do not exist in practice very much that for instance real semiconductor components could be produced using the method that has been brought forth in the before mentioned publication using circle welding without repositioning the laser beam focal point midst the welding process.

Patent application publication US 2010 0047587 A1 discloses a method for joining two substances by using an ultrashort pulse laser beam. At a joining face of the two substances, a filament area is generated by a self-focusing effect of the laser beam in the first substance. Due to the length of the filament area which extends into the second substance, there is no need to accurately align the focal point in the joining face of the two substances.

Patent application publication US 2005 0021170 A1 discloses a method for controlling shipbuilding robotized welding of shaped pieces. Three laser pointers are arranged above a structure to be welded such that the beams of the laser pointers intersect and that the points of incidence of the beams on the surface of the structure to be welded provide three measuring points. The three measuring points are photographed by a camera device. The current height of the structure to be welded is calculated based on the mutual distances between the measuring points which are determined from the photographed visual information.

The greatest disadvantage of the known technique can be seen that getting a unanimous, tight three-dimensional welding joint is not at all possible by its methods in one uninterrupted go. This disadvantage is culminated in many different ways: The welding is slow and thus the costs are high, and also the tightness of the welding is questionable. To obtain a hermetically sealed joint is in practice impossible by using the known technique because a hole of one micrometer in the joint lets the helium out.

The method and the general work unit are defined by the independent claims 1 and 6 respectively. The dependent claims concern optional features of some embodiments of the invention. The intention of this invention is to obtain such a method that disadvantages of the known technique are avoided.

A notable advantage is obtained by the method according to the invention in that all the welding made by a focused laser beam where the welding does not proceed all the time in the same level, can be obtained by one continuous go. When there is no need to perform the welding in different goes and change the laser beam focal point height position between these goes the welding process is considerably faster than according to the methods of the known technique. This means that the production is faster and more efficient and thus a more lucrative economic result is obtained.

Another notable advantage is obtained when the three-dimensional surfaces are welded together using the method according to the invention it renders always when needed a completely tight join, from short joint up to full ring circle welding. Naturally, the method allows also the welding of a planar surface. It does not have any meaning whatsoever, whether the 3D surfaces to be welded are deviating suitably from the planar surface or whether they are intended to be planar surfaces but for some physical reason more or less 3D surfaces during the welding process.

In this document, the term "height value" means the distance of a certain point from a certain comparison level, like for instance a datum level, independently of in what position this comparison level is.

The invention is described in the drawings of this application as follows:
fig 1 presents an equipment configuration in one welding method according to the invention general view in 3D,
fig 2 presents the cross-section that has been presented in fig 1 in the place A-A,
fig 3 presents the action of welding using the method of the invention, as presented in fig 2 from point z,
figs 4 and 5 present chart like one situation seen from above, where there is in process a circle wending using the method of the invention.

Next there is a description of one advantageous application of the invention referring to the before mentioned figures.

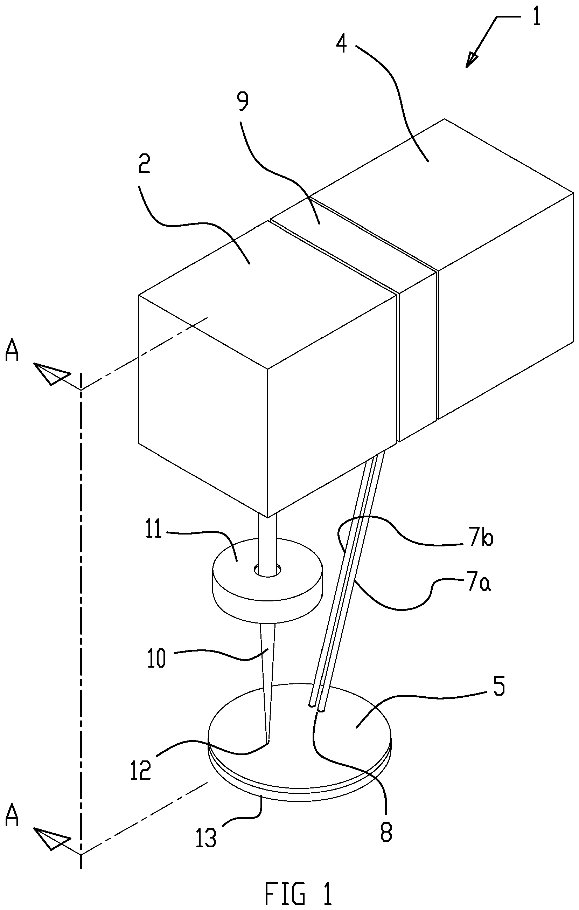

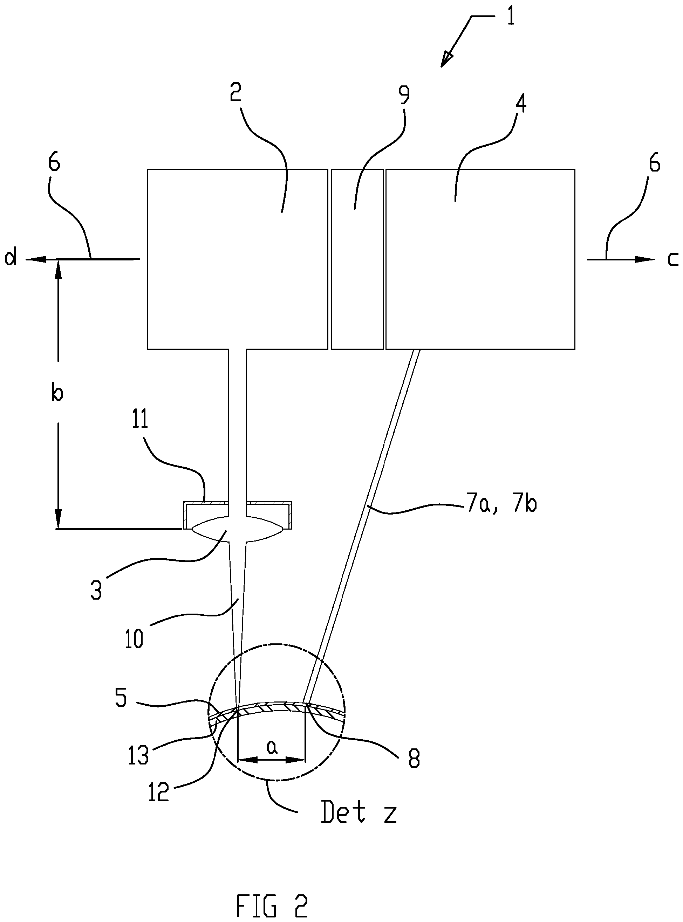

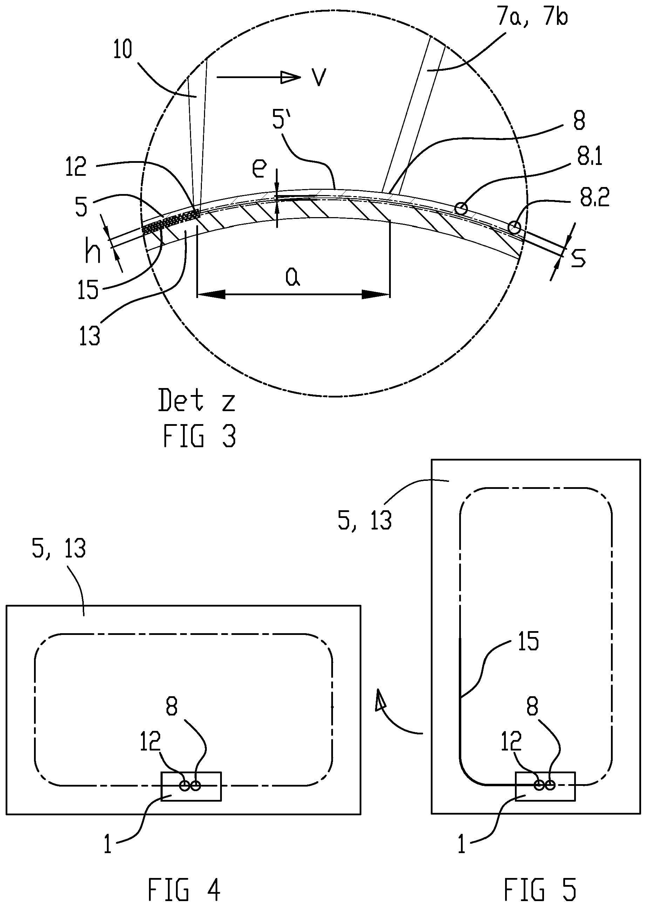

An equipment configuration is described in fig 1, that is ready to perform the welding together of two pieces like to join together two glass plates in their common surface e. Fig 2 presents cross-section A-A and it can be seen, that above the pieces to be welded, first piece 5 and the second piece 13 there is an uniform working unit 1 that composes of a laser device 2, a computer 9 and a measuring device 4. During the action of welding the focused laser beam 10 is moving in relation to the pieces 5, 13 that are to be welded together, into the direction c with a velocity v (figs 2 and 3) and in a similar movement there is also the measurement device 4 measuring the first 3D surface of the surface 5' that is receiving and transmitting light beam 7a, 7b. In a certain point of the first surface 5', like for instance in the point 8 the light beam 7a deflects and returns as the light beam 7b back to the measure device 4. The measure device registers the measure information that it got on the welding path in certain interval points 8.1, 8.2, and so on. The processor of the computer 9 calculates basing on the color of the light beam 7b the height position of these points in relation to a certain base level 6 and these values are stored into the computer 9 memory. When the focused laser beam 10 comes after the measuring event to the point of a certain measure point 8, 8.1, 8.2 etc., the computer calculates basing on the height position information of the point in question a corrected height position information and feeds it into the lens 3 regulating unit 11. The corrected height position information is the downright distance of the point in question from the base level 6 plus the thickness s of the first peace 5. The regulating unit 11 of the lens 3 positions the lens 3 at such a height that the focused laser beam 10 going through of the first piece 5 has its focal point 12 in the common surface e of both pieces 5, 13 and thus the energy of the laser beam melts material of both pieces 5, 13 and as these melted materials get mixed and again hard so the before mentioned pieces get welded together with a welded seam 15.

In fig 3, a situation can be seen where the welding is in process in the weld path following before the above mentioned point 8 calculated points. The regulating unit 11 changes if necessary the height position of the lens 3 at every measured point and thus the welding advances following each position of the common surface e with an accuracy that can be achieved by changing the height position at the successive measured points. The measure event of the points advances in this situation the distance a ahead of the welding event so that the focused laser beam 10 would not cause disturbance for the measuring event.

The before described system of measuring certain points and changing of the height position of the laser beam focal point is described in the Finnish Patent Application nr 20110379. This present application is an additional application of the mentioned application, that is to say, in this application we bring forth further developed results for the invention of that previous application.

When the welding path deviates sideways from the right line and a change of direction is needed for the measuring light beams 7a, 7b and the focused laser beam 10 in relation to the pieces to be welded 5, 13, it can be done by turning the pieces 5, 13 in relation to the work unit 1 or vice versa. It is also possible to turn both of the before mentioned and it is essential that in connection of the method according to the invention, an equipment construction is used that contains the tools to make the necessary direction changes so that the light beams 7a, 7b and the focused laser beam 10 advance essentially one after the other following a certain welding path.

In fig 4 and 5 there is a diagrammatic picture from above about a situation where the pieces 5, 13 to be welded are turned as the circle welding is in process. Fig 4 presents a situation at the beginning of the welding and the fig 5 shows the situation where the welding seam 15 has advanced on the welding path over one corner in a piece that is rectangle with rounded corners.

In the method according to the invention, the size of the focused point of the laser beam 10 is in the size range of 1- 10 µm, but it can be in certain cases different from these limit values. The before mentioned size focal point makes in practice a welded seam 15 height h of the size range 40- 200 µm

The pieces 5, 13 to be joined together can have a large range of thicknesses. For instance a first piece 5 of glass can be at least 3 mm maximum and the other piece 13 also of glass does not have a size limit.

The invention is especially suitable for glass and/or semiconductor substratum, like silicon, technical glass, melted silicon oxide, borosilicate, chalk glass, sapphire, ceramic materials like zirconium oxide, LiTaO and so on, and also the combinations of these materials can be welded. The conducting materials of the pieces 5, 13 can be for instance of chrome, copper, silver, gold, molybdenum, indium tin oxide, or a combination of these.

When the pieces 5, 13 to be joined together contain conducting parts the method according to the invention can be used to join them and/or to protect them against outside oxygen or humidity. As an example of this kind of pieces, semiconductor chips and micro chips can be mentioned where the thicknesses of the conducting metals are about 0,1- 5 µm. It is worth noticing that in these and also in other pieces to be welded the laser beam 10 is directed through the first piece 5 substratum and so this material must be transparent for the laser beam 10 wave length that is used.

It should be noted that although this application presents one advantageous exemplary embodiment of the present invention, it is not intended to limit broader use of the invention in any way; all alternatives for implementing the invention are possible within the scope defined by the claims.

## Claims

1. A method for a general work unit (1) to weld together pieces like glass containing substratum and/or half conductor substratum like a first piece (5) and a second piece (13) according to which method:
a. the pieces (5, 13) are arranged on a work unit and put one upon other in such a way that a common surface (e) is formed between them,
b. a laser beam (10) is focused to the common surface (e) between the pieces (5, 13) so that focal point (12) energy of the laser beam (10) melts material of both of the pieces (5, 13) at the same time,
c. the focused laser beam (10) is set to move in relation to the pieces (5, 13) to be welded, wherein the pieces (5, 13) do not move in relation to each other, with such a velocity (v) that the melted material when getting hard forms a welded seam that joins the pieces (5, 13) together,
**characterized in that**
d. the height position of the focal point (12) of the focused laser beam (10) is changed during the welding stepwise so that this height position follows essentially the height position of the common surface (e) of the pieces (5, 13) to be welded together with an accuracy of certain steps,
e. the height position of the focal point (12) is changed so that
i. light beams (7a, 7b) of the measuring device (4) measure the height position information of the first surface (5') of the first piece (5) in certain points (8, 8.1, 8.2 etc.) in a certain distance (a) in front of the focused laser beam (10) essentially on the advancement path of the laser beam (10) and the measuring device (4) feeds this information to a computer (9),
ii. the computer (9) treats the measured height position information from the points (8, 8.1, 8.2 etc.) so that basing on this measured height position information the height positions of these points are achieved in relation to a certain level, like for instance in relation to a basic level (6),
iii. the computer (9) feeds at least with about the thickness (s) of the first piece (5) i.e. the distance between the upper side and the down side, corrected height values to a regulating unit (11) that changes the distance of the lens (3) or lens combination from a certain level, like for instance basic level (6) so that the focal point (12) of the laser beam (10) is focused at each of the measured points (8, 8.1, 8.2 etc.) to the height position that is achieved by taking the actual point value and adding to it at least about the thickness (s) of the first piece (5), that is in the common surface area (e),
f) the advancing direction of the light beams (7a, 7b) and the focused laser beam (10) in relation to the pieces (5, 13) is changed during the welding process by turning the general work unit (1) and/or the work unit of the pieces (5, 13) in the level direction of the basic level (6) or by some other method that is suitable to the situation when making a welding other than sideways directly advancing welding, like circle welding.

2. A method according to the claim 1 **characterized in that** it is used to join by welding any such first piece (5) to another piece (13) that contains such substratum that is transparent in the wave lengths of the laser beam (10) that is used in the method.

3. A method according to the claim 1 or 2 **characterized in that** the height (h) of the welded seam that is achieved by it is 30- 250 µm.

4. A method according to some of the claims 1 - 3 **characterized in that** when joining to the second piece (13) using the method the first piece (5) in the side where the laser beam (10) is coming the thickness (s) of the first piece (5) is 30 - 3000 µm.

5. A method according to some of the claims 1 - 4 **characterized in that** measuring the height position information of the first surface (5') of the first piece (5) comprises transmitting a light beam (7a) of the light beams (7a, 7b) to one of the certain points (8, 8.1, 8.2 etc.) and receiving a light beam (7b) of the light beams (7a, 7b) that has been deflected from the first surface (5') of the first piece (5), and wherein the measured height position information comprises the color of the received light beam (7b).

6. A general work unit (1) to weld together pieces like glass containing substratum and/or half conductor substratum like a first piece (5) and a second piece (13), wherein the general work unit (1) comprises:
a work unit for arranging the pieces (5, 13) one upon other in such a way that a common surface (e) is formed between;
a laser device (2) for producing a laser beam (10);
a lens (3) or a lens combination for focusing the laser beam (10) to the common surface (e) between the pieces (5, 13) so that the focal point (12) energy of the laser beam (10) melts material of both of the pieces (5, 13) at the same time;
means for setting to move the focused laser beam (10) in relation to the pieces (5, 13) to be welded, wherein the pieces (5, 13) do not move in relation to each other, with such a velocity (v) that the melted material when getting hard forms a welded seam that joins the pieces (5, 13) together;
**characterized in that** the apparatus (1) further comprises:
a measuring device (4) for producing light beams (7a, 7b) for measuring the height position information of the first surface (5') of the first piece (5) in certain points (8, 8.1, 8.2 etc.) in a certain distance (a) in front of the focused laser beam (10) essentially on the advancement path of the laser beam (10);
a regulating unit (11) for changing the height position of the lens (3) or the lens combination so that height position of the focal point (12) of the focused laser beam (10) is changed during the welding stepwise in such a manner that this height position follows essentially the height position of the common surface (e) of the pieces (5, 13) to be welded together with an accuracy of certain steps;
a computer (9) for receiving the height position information achieved by the measuring device (4),
for treating the measured height position information from the points (8, 8.1, 8.2 etc.) so that basing on this measured height position information the height positions of these points are achieved in relation to a certain level, like for instance in relation to a basic level (6), and
for feeding at least with about the thickness (s) of the first piece (5) i.e. the distance between the upper side and the down side, corrected height values to the regulating unit (11) that changes the distance of the lens (3) or lens combination from a certain level, like for instance basic level (6) so that the focal point (12) of the laser beam (10) is focused at each of the measured points (8, 8.1, 8.2 etc.) to the height position that is achieved by taking the actual point value and adding to it at least about the thickness (s) of the first piece (5), that is in the common surface area (e); and
means for changing the advancing direction of the light beams (7a, 7b) and the focused laser beam (10) in relation to the pieces (5, 13) during the welding process by turning the general work unit (1) and/or the work unit of the pieces (5, 13) in the level direction of the basic level (6) or by some other method that is suitable to the situation when making a welding other than sideways directly advancing welding, like circle welding.

## Patentansprüche

1. Ein Verfahren für eine allgemeine Arbeitseinheit (1) zum Zusammenschweißen von Teilen wie glasenthaltendes Substrat und/oder Halbleitersubstrat wie ein erstes Teil (5) und eine zweites Teil (13), wobei das Verfahren Folgendes umfasst:
a) die Teile (5, 13) werden auf einer Arbeitseinheit angeordnet und aufeinander so platziert, dass eine gemeinsame Oberfläche (e) zwischen diesen gebildet wird,
b) ein Laserstrahl (10) wird auf die gemeinsame Oberfläche (e) zwischen den Teilen (5, 13) so fokussiert, dass Energie des Brennpunkts (12) des Laserstrahls (10) Material der beiden Teile (5, 13) gleichzeitig schmilzt,
c) der fokussierte Laserstrahl (10) eingestellt wird, um sich relativ zu den zu schweißenden Teilen (5, 13) zu bewegen, wobei sich die Teile (5, 13) nicht relativ zueinander bewegen, mit einer solchen Geschwindigkeit (v), dass das geschmolzene Material, wenn es hart wird, eine Schweißnaht bildet, die die Teile (5, 13) miteinander verbindet.
**dadurch gekennzeichnet, dass**
d) die Höhenposition des Brennpunkts (12) des fokussierten Laserstrahls (10) während des Schweißens schrittweise geändert wird, so dass diese Höhenposition im Wesentlichen der Höhenposition der gemeinsamen Oberfläche (e) der Teile (5, 13) folgt, die mit einer Genauigkeit bestimmter Schritte zusammenzuschweißen sind,
e) die Höhenposition des Brennpunkts (12) so geändert wird, dass
i. Lichtstrahlen (7a, 7b) der Messvorrichtung (4) die Höhenpositionsinformation der ersten Oberfläche (5') des ersten Teils (5) an bestimmten Punkten (8, 8.1, 8.2 usw.) in einem bestimmten Abstand (a) vor dem fokussierten Laserstrahl (10) im Wesentlichen auf dem Vorschubweg des Laserstrahls (10) messen und die Messvorrichtung diese Information an einen Computer (9) weitergibt,
ii. der Computer (9) die gemessene Höhenpositionsinformation von den Punkten (8, 8.1, 8.2 usw.) so behandelt, dass basierend auf dieser gemessenen Höhenpositionsinformation die Höhenpositionen dieser Punkte im Verhältnis zu einem bestimmten Niveau, wie z. B. im Verhältnis zu einem Basisniveau (6) erhalten werden,
iii. der Computer (9) mit mindestens ungefähr der Dicke (s) des ersten Teils (5), d. h. der Abstand zwischen der Oberseite und der Unterseite, korrigierte Höhenwerte an eine Regeleinheit (11) weitergibt, die den Abstand der Linse (3) oder der Linsenkombination von einem bestimmten Niveau, wie z. B. Basisniveau (6) ändert, so dass der Brennpunkt (12) des Laserstrahls (10) an jedem der gemessenen Punkte (8, 8.1, 8.2 usw.) auf die Höhenposition fokussiert wird, die erhalten wird, indem der Ist-Punktwert genommen wird und diesem mindestens ungefähr die Dicke (s) des ersten Teils (5) hinzugefügt wird, das sich im gemeinsamen Oberflächenbereich (e) befindet,
f) die Vorschubrichtung der Lichtstrahlen (7a, 7b) und des fokussierten Laserstrahls (10) im Verhältnis zu den Teilen (5, 13) während des Schweißvorgangs durch Drehen der allgemeinen Arbeitseinheit (1) und/oder der Arbeitseinheit der Teile (5, 13) in der Niveaurichtung des Basisniveaus (6) oder durch irgendein anderes Verfahren geändert wird, das für die Situation geeignet ist, bei der ein anderes Schweißen als seitwärtiges direktes Vorschubschweißen, wie z. B. Kreisschweißen ausgeführt wird.

2. Verfahren gemäß Anspruch 1, **dadurch gekennzeichnet, dass** es verwendet wird, um ein solches erstes Teil (5) an einem anderen Teil (13) mittels Schweißen zu befestigen, welches ein derartiges Substrat aufweist, das in den Wellenlängen des Laserstrahls (10), der in dem Verfahren verwendet wird, transparent ist.

3. Verfahren gemäß Anspruch 1 oder 2, **dadurch gekennzeichnet, dass** die Höhe (h) der Schweißnaht, die damit erhalten wird, bei 30-250 µm liegt.

4. Verfahren gemäß Anspruch 1 bis 3, **dadurch gekennzeichnet, dass** beim Befestigen am zweiten Teil (13) unter Verwendung des Verfahrens am ersten Teil (5) an der Seite, von der der Laserstrahl (10) kommt, die Dicke (s) des ersten Teils (5) bei 30-3000 µm liegt/liegen.

5. Verfahren gemäß einem der Ansprüche 1 bis 4, **dadurch gekennzeichnet, dass** das Messen der Höhenpositionsinformation der ersten Oberfläche (5') des ersten Teils (5) Übertragen eines Lichtstrahls (7a) der Lichtstrahlen (7a, 7b) auf einen der bestimmten Punkte (8, 8.1, 8.2 usw.) und Empfangen eines Lichtstrahls (7b) der Lichtstrahlen (7a, 7b) umfasst, der von der ersten Oberfläche (5') des ersten Teils (5) abgelenkt wurde, und wobei die gemessene Höhenpositionsinformation die Farbe des empfangenen Lichtstrahls (7b) beinhaltet.

6. Eine allgemeine Arbeitseinheit (1) zum Zusammenschweißen von Teilen wie glasenthaltendes Substrat und/oder Halbleitersubstrat wie ein erstes Teil (5) und ein zweites Teil (13), wobei die Arbeitseinheit (1) Folgendes aufweist:
eine Arbeitseinheit zum Anordnen der Teile (5, 13) übereinander, so dass eine gemeinsame Oberfläche (e) zwischen diesen gebildet wird;
eine Laservorrichtung (2) zum Erzeugen eines Laserstrahls (10);
eine Linse (3) oder eine Linsenkombination zum Fokussieren des Laserstrahls (10) auf die gemeinsame Oberfläche (e) zwischen den Teilen (5, 13), so dass die Energie des Brennpunkts (12) des Laserstrahls (10) Material der beiden Teile (5, 13) gleichzeitig schmilzt;
Mittel zum Einstellen, um den fokussierten Laserstrahl (10) relativ zu den zu schweißenden Teilen (5, 13) zu bewegen, wobei die Teile (5, 13) sich nicht relativ zueinander bewegen, mit einer solchen Geschwindigkeit (v), dass das geschmolzene Material, wenn es hart wird, eine Schweißnaht bildet, die die Teile (5, 13) miteinander verbindet;
**dadurch gekennzeichnet, dass** die Vorrichtung (1) darüber hinaus Folgendes aufweist:
eine Messvorrichtung (4) zur Erzeugung von Lichtstrahlen (7a, 7b) zum Messen der Höhenpositionsinformation der ersten Oberfläche (5') des ersten Teils (5) an bestimmten Punkten (8, 8.1, 8.2 usw.) in einem bestimmten Abstand (a) vor dem fokussierten Laserstrahl (10) im Wesentlichen auf dem Vorschubweg des Laserstrahls (10);
eine Regeleinheit (11) zum Ändern der Höhenposition der Linse (3) oder der Linsenkombination, so dass die Höhenposition des Brennpunkts (12) des fokussierten Laserstrahls (10) während des Schweißens schrittweise so geändert wird, dass diese Höhenposition im Wesentlichen der Höhenposition der gemeinsamen Oberfläche (e) der Teile (5, 13) folgt, die mit einer Genauigkeit bestimmter Schritte zusammenzuschweißen sind;
einen Computer (9) zum Empfangen der Höhenpositionsinformation, die durch die Messvorrichtung (4) erhalten wird,
zum Behandeln der gemessenen Höhenpositionsinformation von den Punkten (8, 8.1, 8.2 usw.), so dass basierend auf dieser gemessenen Höhenpositionsinformation die Höhenpositionen dieser Punkte relativ zu einem bestimmten Niveau, wie z. B. relativ zu einem Basisniveau (6) erhalten werden, und
zum Zuführen mit mindestens ungefähr der Dicke (s) des ersten Teils (5), d. h. der Abstand zwischen der Oberseite und der Unterseite, von korrigierten Höhenwerten an die Regeleinheit (11), die den Abstand der Linsen (3) oder der Linsenkombination von einem bestimmten Niveau ändert, wie z. B. Basisniveau (6), so dass der Brennpunkt (12) des Laserstrahls (10) an jedem der gemessenen Punkte (8, 8.1, 8.2 usw.) auf die Höhenposition fokussiert wird, die erhalten wird, indem der Ist-Punktwert genommen und diesem mindestens ungefähr die Dicke (s) des ersten Teils (5) hinzugefügt wird, das sich im gemeinsamen Oberflächenbereich (e) befindet; und
Mittel zum Ändern der Vorschubrichtung der Lichtstrahlen (7a, 7b) und des fokussierten Laserstrahls (10) relativ zu den Teilen (5, 13) während des Schweißvorgangs durch Drehen der allgemeinen Arbeitseinheit (1) und/oder der Arbeitseinheit der Teile (5, 13) in der Niveaurichtung des Basisniveaus (6) oder durch irgendein anderes Verfahren, das für die Situation geeignet ist, bei der ein anderes Schweißen als seitwärtiges direktes Vorschubschweißen, wie z. B. Kreisschweißen ausgeführt wird.

## Revendications

1. Procédé pour une unité de travail général (1) permettant de souder ensemble des pièces telles qu'un substrat contenant du verre et/ou un substrat semi-conducteur, par exemple une première pièce (5) et une deuxième pièce (13), selon lequel :
a. les pièces (5, 13) sont agencées sur une unité de travail et sont placées l'une sur l'autre de telle manière qu'une surface commune (e) est formée entre celles-ci,
b. un faisceau laser (10) est focalisé vers la surface commune (e) située entre les pièces (5, 13) de sorte qu'une énergie, de point focal (12), du faisceau laser (10) fait fondre de la matière appartenant aux deux pièces (5, 13) en même temps,
c. le faisceau laser focalisé (10) est réglé pour se déplacer par rapport aux pièces (5, 13) à souder, dans lequel les pièces (5, 13) ne se déplacent pas l'une par rapport à l'autre, avec une vitesse (v) telle que la matière soudé, lorsqu'elle durcit, forme un joint soudé qui réunit ensemble les pièces (5, 13),
**caractérisé en ce que**
d. la position en hauteur du point focal (12) du faisceau laser focalisé (10) est modifiée pendant le soudage de manière progressive de sorte que ladite position en hauteur suit essentiellement la position en hauteur de la surface commune (e) des pièces (5, 13) à souder ensemble avec une précision correspondant à certaines étapes,
e. la position en hauteur du point focal (12) est modifiée de sorte que
i. des faisceaux lumineux (7a, 7b) du dispositif de mesure (4) mesurent les informations de position en hauteur de la première surface (5') de la première pièce (5) en certains points (8, 8.1, 8.2, etc.) à une certaine distance (a) devant le faisceau laser focalisé (10) essentiellement sur le trajet de progression du faisceau laser (10) et le dispositif de mesure (4) alimente ladite information vers un ordinateur (9),
ii. l'ordinateur (9) traite les informations de mesure de position en hauteur par rapport aux points (8, 8.1, 8.2, etc.) de sorte que, en se basant sur lesdites informations de mesure de position en hauteur, les positions en hauteur desdits points sont obtenues en liaison avec un certain niveau, par exemple en liaison avec un niveau de base (6),
iii. l'ordinateur (9) alimente, au moins avec environ l'épaisseur (s) de la première pièce (5), c'est-à-dire la distance entre le côté haut et le côté bas, des valeurs de hauteur corrigées vers une unité de régulation (11) qui modifie la distance de la lentille (3) ou de la combinaison de lentilles par rapport à un certain niveau, par exemple un niveau de base (6), de sorte que le point focal (12) du faisceau laser (10) est focalisé au niveau de chacun des points mesurés (8, 8.1, 8.2, etc.) vers la position en hauteur qui est obtenue en prenant la valeur de point réelle et en lui ajoutant au moins environ l'épaisseur (s) de la première pièce (5), qui se trouve dans la zone de surface commune (e),
f) la direction de progression des faisceaux lasers (7a, 7b) et du faisceau laser focalisé (10) par rapport aux pièces (5, 13) est modifiée pendant le procédé de soudage grâce à une étape consistant à tourner l'unité de travail général (1) et/ou l'unité de travail des pièces (5, 13) dans la direction de niveau du niveau de base (6) ou grâce à un autre procédé approprié pour la situation dans laquelle on réalise un soudage autre qu'un soudage progressant de manière directement latérale, comme un soudage circulaire.

2. Procédé selon la revendication 1, **caractérisé en ce qu'**il est utilisé pour réunir par soudage n'importe quelle première pièce (5) de ce type à une autre pièce (13) qui contient un substrat qui est transparent pour les longueurs d'onde du faisceau laser (10) utilisé dans le présent procédé.

3. Procédé selon la revendication 1 ou 2, **caractérisé en ce que** la hauteur (h) du joint soudé obtenu grâce audit procédé est comprise entre 30 et 250 µm.

4. Procédé selon l'une quelconque des revendications 1 à 3, **caractérisé en ce que**, lorsqu'on réunit, en utilisant ledit procédé, la première pièce (5) à la deuxième pièce (13) du côté d'où vient le faisceau laser (10), l'épaisseur (s) de la première pièce (5) est comprise entre 30 et 3 000 µm.

5. Procédé selon l'une quelconque des revendications 1 à 4, **caractérisé en ce que** l'étape de mesure des informations de position en hauteur de la première surface (5') de la première pièce (5) comprend les étapes consistant à émettre un faisceau lumineux (7a) parmi les faisceaux lumineux (7a, 7b) vers un des certains points (8, 8.1, 8.2, etc.) et à recevoir un faisceau lumineux (7b) parmi les faisceaux lumineux (7a, 7b) qui a été dévié par la première surface (5') de la première pièce (5), et dans lequel les informations de mesure de position en hauteur comprennent la couleur du faisceau lumineux (7b) reçu.

6. Unité de travail général (1) permettant de souder ensemble des pièces telles qu'un substrat contenant du verre et/ou un substrat semi-conducteur, par exemple une première pièce (5) et une deuxième pièce (13), dans lequel l'unité de travail général (1) comprend :
une unité de travail permettant d'agencer les pièces (5, 13) l'une sur l'autre de telle manière qu'une surface commune (e) est formée entre celles-ci ;
un dispositif laser (2) permettant de produire un faisceau laser (10) ;
une lentille (3) ou une combinaison de lentilles permettant de focaliser le faisceau laser (10) vers la surface commune (e) située entre les pièces (5, 13) de sorte que l'énergie, de point focal (12), du faisceau laser (10) fait fondre de la matière appartenant aux deux pièces (5, 13) en même temps ;
un moyen permettant de régler, destiné à déplacer le faisceau laser focalisé (10) par rapport aux pièces (5, 13) à souder, dans laquelle les pièces (5, 13) ne se déplacent pas l'une par rapport à l'autre, avec une vitesse (v) telle que la matière fondue, lorsqu'elle durcit, forme un joint soudé qui réunit les pièces (5, 13) ensemble ;
**caractérisé en ce que** l'appareil (1) comprend en outre :
un dispositif de mesure (4) permettant de produire des faisceaux lumineux (7a, 7b) permettant de mesurer les informations de position en hauteur de la première surface (5') de la première pièce (5) en certains points (8, 8.1, 8.2, etc.) à une certaine distance (a) devant le faisceau laser focalisé (10) essentiellement sur le trajet de progression du faisceau laser (10) ;
une unité de régulation (11) permettant de modifier la position en hauteur de la lentille (3) ou de la combinaison de lentilles de sorte que la position en hauteur du point focal (12) du faisceau laser focalisé (10) est modifiée pendant le soudage de manière progressive de telle manière que ladite position en hauteur suit essentiellement la position en hauteur de la surface commune (e) des pièces (5, 13) à souder ensemble avec une précision correspondant à certaines étapes ;
un ordinateur (9) permettant de recevoir les informations de position en hauteur obtenues grâce au dispositif de mesure (4),
pour traiter les informations de mesure de position en hauteur par rapport aux points (8, 8.1, 8.2, etc.) de sorte que, en se basant sur lesdites informations de mesure de position en hauteur, les positions en hauteur desdits points sont obtenues par rapport à un certain niveau, par exemple par rapport à un niveau de base (6), et
pour alimenter, au moins avec environ l'épaisseur (s) de la première pièce (5), c'est-à-dire la distance entre le côté haut et le côté bas, des valeurs de hauteur corrigées vers l'unité de régulation (11) qui modifie la distance de la lentille (3) ou de la combinaison de lentilles par rapport à un certain niveau, par exemple un niveau de base (6), de sorte que le point focal (12) du faisceau laser (10) est focalisé au niveau de chacun des points mesurés (8, 8.1, 8.2, etc.) vers la position en hauteur qui est obtenue en prenant la valeur de point réelle et en lui ajoutant au moins environ l'épaisseur (s) de la première pièce (5), qui se trouve dans la zone de surface commune (e) ; et
un moyen permettant de modifier la direction de progression des faisceaux lumineux (7a, 7b) et du faisceau laser focalisé (10) par rapport aux pièces (5, 13) pendant le procédé de soudage grâce à une étape consistant à tourner l'unité de travail général (1) et/ou l'unité de travail des pièces (5, 13) dans la direction de niveau du niveau de base (6) ou grâce à un autre procédé approprié pour la situation dans laquelle on réalise un soudage autre qu'un soudage progressant de manière directement latérale, comme un soudage circulaire.
